# FASCICULE DE BREVET EUROPEEN

(11) **EP 2 329 612 B1**
(45) Date de publication et mention de la délivrance du brevet: **04.06.2014**
(21) Numéro de dépôt: 09752410.2
(22) Date de dépôt: 25.09.2009
(51) Int. Cl.: H04L 1/00, H04L 5/14

(54) **PROCÉDÉ D'ACCÈS DE TRANSMISSION SANS DUPLEXEUR FRÉQUENTIEL**
VERFAHREN ZUM ZUGREIFEN AUF EINE ÜBERTRAGUNG OHNE EINEN FEQUENZDUPLEXER
METHOD FOR ACCESSING A TRANSMISSION WITHOUT A FREQUENCY DUPLEXER

(30) Priorité: 26.09.2008 FR 0856481
(43) Date de publication de la demande: 08.06.2011
(73) Titulaire: Centre National d'Etudes Spatiales, 75001 Paris (FR)
(72) Inventeur: GONZALEZ PEREZ, Hugo, F-31210 Bordes De Riviere (FR); CLARAC, Laurence, F-31400 Toulouse (FR)
(74) Mandataire: Blot, Philippe Robert Emile
(86) Numéro de dépôt international: PCT/FR2009/051819
(87) Numéro de publication internationale: WO 2010/034947

(56) Documents cités:
- WO-A-99/63672
- CN-A- 1 211 114
- GB-A- 2 339 366
- JP-A- 2005 012 321
- US-A1- 2002 069 038
- US-A1- 2008 165 709
- US-A1- 2008 184 081
- US-B1- 6 529 558

## Description

L'invention se rapporte à un terminal de communication destiné à échanger des messages sur une liaison bidirectionnelle, un procédé d'accès bidirectionnel mis en oeuvre par le terminal, et un système de communication intégrant le terminal.

Des systèmes de communication comprenant des terminaux qui échangent sur une liaison bidirectionnelle des messages de communication avec une station centrale sont connus, notamment les systèmes de communication par satellite comme par exemple le système décrit dans la demande de brevet US 4 979 170 B1, et les systèmes de radiocommunication cellulaire terrestre comme par exemple les systèmes décrits dans les demande de brevet US 2008/165709 A1 et JP 2005/012321 A.

Une voie aller commune de diffusion depuis la station jusqu'aux terminaux est utilisée pour permettre aux terminaux de recevoir des messages de diffusion générale (dénommé broadcast en anglais) et des messages de diffusion sélective, dédiés à un seul terminal (dénommé unicast en anglais) ou dédiés à un groupe de terminaux (dénommés multicast en anglais). Les messages de diffusion sélective sont adressés de façon à ce que le terminal soit capable de reconnaitre les informations qui lui sont destinées. Chaque terminal émet sur une voie retour, dans une bande de fréquences commune à l'ensemble des terminaux et dans au moins une tranche temporelle d'émission, un message de retour vers la station centrale. Une gestion de l'accès à la voie aller et à l'ensemble des voies retour des terminaux est mise en oeuvre au niveau de la station centrale. La gestion peut être soit une gestion de type à duplexage par division de fréquence (dénommé FDD en anglais pour Frequency Division Duplex), soit une gestion de type à duplexage par division temporelle (dénommé TDD en anglais pour Time Division Duplex). Dans le cas d'un accès de type à duplexage fréquentiel FDD, la station centrale est apte à recevoir et à émettre en même temps sur deux bandes de fréquences différentes, ce qui requiert l'utilisation d'un duplexeur fréquentiel.

Un duplexeur fréquentiel est composé de deux filtres, l'un accordé à une fréquence d'émission, l'autre accordé à une fréquence de réception avec une isolation élevée pouvant dépasser 120 dB entre la bande d'émission et la bande de réception. Bien qu'un tel composant soit complexe et couteux à réaliser, il est couramment utilisé dans une station centrale du fait que son coût est amorti en tant que composant d'une infrastructure.

Dans le cas d'un accès de type à duplexage temporel TDD, encore appelé simplex alterné, la station centrale est apte à recevoir et à émettre dans des tranches de temps différentes, alternées et disjointes.

Lorsque les émissions et les réceptions sont effectuées en TDD dans une même bande de fréquences, l'accès est dénommé TDD simple.

Lorsque les émissions et les réceptions sont effectuées en TDD dans deux bandes de fréquences différentes, l'accès est dénommé TDD hybride, ce qui n'est certes pas optimal du point de vue de la capacité de transmission mais souvent rendu nécessaire lorsque les bandes allouées respectivement sur la voie aller et la voie retour sont trop proches et que la mise en oeuvre d'un duplexeur fréquentiel s'avère trop complexe et coûteuse.

Une gestion de l'accès à la voie retour de chaque terminal est également nécessaire au niveau de chaque terminal et le type de gestion choisie dépend des bandes de fréquences, allouées sur les voies aller et retour, et du type de gestion d'accès sélectionné au niveau de la station centrale.

A l'instar de la station centrale, la gestion de cet accès peut être de type FDD ou TDD.

Dans le cas d'un accès TDD, du fait de la présence de temps de propagation aller et retour entre la station centrale et les terminaux, différents selon la position géographique des terminaux, des temps de garde au niveau de la station centrale entre les moments d'émission et les moments de réception sont nécessaires, ce qui ampute d'autant la capacité de transmission du système.

Dans le cas d'un accès FDD, un duplexeur complexe et coûteux est requis au niveau du terminal pour assurer une isolation suffisante entre la bande de la voie aller et celle de la voie retour.

Le problème technique est de s'affranchir de l'utilisation d'un duplexeur au niveau du terminal et de diminuer les temps de garde induits au niveau de la station centrale.

A cet effet, l'invention a pour objet un terminal de communication destiné à émettre et à recevoir des messages sur une liaison bidirectionnelle vers une station centrale de communication comprenant :

un récepteur apte à recevoir un premier signal de communication dans au moins une tranche temporelle de réception, et à démoduler le signal reçu dans une même tranche temporelle de réception en une première suite de symboles formant un bloc de symboles, le récepteur comportant une unité de décodage globale associée à un codage global prédéterminé apte à corriger dans le bloc de symboles un nombre maximal prédéterminé de symboles erronés consécutifs, et un émetteur apte à émettre un deuxième message de communication, caractérisé en ce qu' il comprend une unité de gestion et de commande d'accès apte à commander l'émetteur pour émettre le deuxième message dans au moins une tranche temporelle d'émission ininterrompue et distincte, chaque tranche temporelle d'émission ininterrompue comprenant au moins un intervalle de temps d'émission associé à une tranche de réception, et en ce que la durée totale des intervalles de temps d'émission contenus dans la même tranche temporelle de réception est inférieure ou égale à la durée correspondant au nombre maximal prédéterminé de symboles erronés consécutifs.

Suivant des modes particuliers de réalisation, le terminal comporte l'une ou plusieurs des caractéristiques suivantes :
- la durée totale des intervalles de temps d'émission contenus dans la même tranche temporelle de réception est égale à la durée correspondant au nombre maximal prédéterminé de symboles erronés consécutifs ;
- un seul intervalle d'émission est contenu dans la même tranche temporelle de réception ;
- une tranche temporelle d'émission comprend un premier intervalle d'émission associé à une première tranche temporelle de réception et adjacent à un deuxième intervalle d'émission associé à une deuxième tranche temporelle de réception, les première et deuxième tranches temporelles de réception étant consécutives ;
- les durées d'un symbole du premier message et d'un symbole du deuxième message sont égales ;
- la durée d'une tranche temporelle de réception quelconque est la même ;
- l'unité de gestion et de commande d'accès est apte à désactiver le récepteur lorsque l'émetteur émet de sorte à éviter un couplage électromagnétique entre l'émetteur et le récepteur ;
- le terminal comprend une antenne et un commutateur électronique connecté à l'antenne, le commutateur étant apte à déconnecter le récepteur de l'antenne ;
- le terminal comprend un dispositif de protection contre les surcharges radiofréquences connecté à l'entrée du récepteur ;
- le terminal est dépourvu de duplexeur fréquentiel à base de filtres isolés entre eux de sorte que le terminal est apte à fonctionner en simplex alterné dans le temps ;
- l'unité de décodage globale associée à un codage global prédéterminé comprend un décodeur associé à un code correcteur d'erreur compris dans l'ensemble des codes par bloc et des codes par convolution ;
- l'unité de décodage globale associée à un codage global prédéterminé comprend au moins un décodeur correcteur d'erreurs associé à un code correcteur d'erreur compris dans l'ensemble des codes à vérification de parité à faible densité (LDPC), des turbo-codes, des codes Reed-Solomon (RS), des codes à treillis, des codes concaténés, des codes LT (Luby Transform), des codes Raptor ;
- l'unité de décodage globale associée à un codage globale prédéterminé comprend au moins un décodeur de type à vote majoritaire associé à un code par répétition de paquet ;
- l'unité de décodage comprend une unité pour désentrelacer un bloc de symboles selon une période d'entrelacement Te ;
- l'unité de gestion de commande d'accès est apte à recevoir des informations de retard de propagation et des consignes d'affection de ressources de transmission selon un schéma d'accès prédéterminé, et à déterminer la trame des émissions et des réceptions du terminal ;
- le terminal comprend une unité de détermination de distance entre le terminal et la station centrale de communication apte à fournir des informations de retard de propagation ;
- la bande de fréquence de l'émetteur et la bande de fréquence du récepteur sont différentes de sorte que le terminal est apte à fonctionner dans un mode d'accès duplexé à la fois en temporel et en fréquentiel ;
- la bande de fréquence de l'émetteur et la bande de fréquence du récepteur sont les mêmes de sorte que le terminal est apte à fonctionner dans un mode d'accès duplexé seulement en temporel.

L'invention a également pour objet un procédé d'accès bidirectionnel destiné à un terminal de communication apte à émettre et à recevoir des messages sur une liaison bidirectionnelle vers et d'une station centrale de communication comprenant les étapes consistant à recevoir dans une tranche temporelle de réception par un récepteur un premier signal de communication, démoduler par un démodulateur le signal reçu en une suite de symboles d'information formant un bloc, décoder par une unité de décodage globale associée à un codage global prédéterminé le bloc de symboles démodulés et corriger le cas échéant un nombre de symbole erronés consécutifs pouvant atteindre un nombre maximal de symboles erronés consécutifs par bloc prédéterminé, et émettre par un émetteur un deuxième signal de communication, caractérisé en ce qu'il comprend l'étape consistant à activer par un l'unité de gestion et de commande d'accès l'émetteur pour émettre le deuxième message dans au moins une tranche temporelle d'émission ininterrompue et distincte, chaque tranche temporelle d'émission ininterrompue et distincte comprenant au moins un intervalle de temps d'émission associé à une tranche de réception, et en ce que la durée totale des intervalles de temps d'émission contenus dans la même tranche temporelle de réception est inférieure ou égale à la durée correspondant au nombre maximal prédéterminé de symboles erronés consécutifs.

L'invention a également pour objet un système de communication destiné à transférer sur une liaison bidirectionnelle des messages entre une station centrale de communication et au moins un terminal de communication, comprenant au moins un terminal de communication tel que défini ci-dessus, une station centrale de communication comportant une unité de codage globale correspondant à l'unité de décodage globale du terminal et une unité de gestion et de commande d'accès apte à gérer les accès des voies aller et retour vers et depuis les au moins un terminaux.

L'invention sera mieux comprise à la lecture de la description d'une forme de réalisation qui va suivre, donnée uniquement à titre d'exemple et faite en se référant aux dessins sur lesquels :
- la Figure 1 est une vue d'un exemple d'architecture classique d'un système de communication intégrant des terminaux,
- la Figure 2 est un diagramme temporel des moments d'émission et de réception des différents éléments du système de la figure 1 dans lequel les terminaux de conception classique et la station centrale utilisent tous deux un accès de type FDD,
- la Figure 3 est un diagramme temporel des moments d'émission et de réception des différents éléments du système de la figure 1 dans lequel les terminaux de conception classique et la station centrale utilisent un accès de type TDD simple,
- la Figure 4 est une vue d'une architecture d'un terminal selon l'invention,
- la Figure 5 est un diagramme temporel typique des moments d'émission et de réception d'un terminal décrit à la figure 4,
- la Figure 6 est ordinogramme du procédé d'accès bidirectionnel mis en oeuvre par le terminal de la figure 4,
- la Figure 7 est un diagramme temporel des moments d'émission et de réception des différents éléments du système de la figure 1 lorsque les terminaux sont du type décrit à la figure 4 et lorsque l'accès au niveau de la station centrale est de type FDD,
- la Figure 8 est un diagramme temporel des moments d'émission et de réception des différents éléments du système de la figure 1 lorsque les terminaux sont du type décrit à la figure 4 et lorsque l'accès au niveau de la station centrale est de type TDD simple.

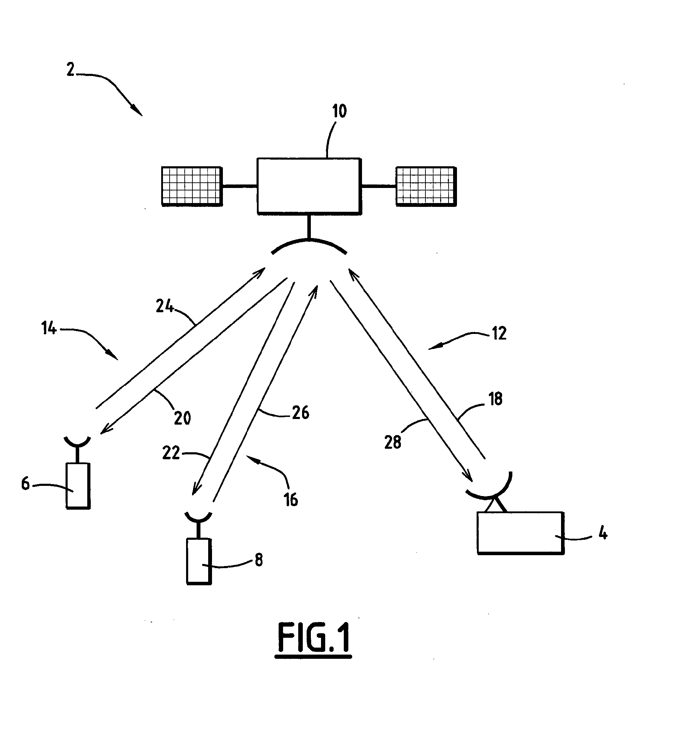

Suivant la figure 1, un système de communication 2 comprend une station centrale 4 de communication et une pluralité de terminaux, ici au nombre de deux, constituée d'un premier terminal 6 et d'un deuxième terminal 8.

Les deux terminaux 6 et 8 sont aptes à échanger des messages de communication avec la station centrale 4 via un satellite de communication 10 relayant de manière transparente les messages de communication.

Une première voie 12, dénommée voie aller, est une voie de transport de messages par voie hertzienne depuis la station 4 vers les terminaux 6, 8.

Une deuxième voie 14, respectivement une troisième voie 16, dénommées voies retour sont des voies de transport de messages de retour par voie hertzienne depuis le premier terminal 6, respectivement le deuxième terminal 8 vers la station 4.

La voie aller 12 se compose d'une première liaison montante 18, partant de la station vers le satellite 10 et fonctionnant dans une première bande d'émission montante, par exemple dans une première sous-bande de la bande C, et de premières liaisons descendantes 20, 22, partant du satellite vers les terminaux 6, 8 et fonctionnant dans une même première bande de réception, par exemple une première sous-bande de la bande L.

Chaque première liaison descendante 20, 22 est destinée à un seul terminal correspondant 6, 8, les signaux émis pour les premières liaisons descendantes 20, 22 par le satellite 10 étant identiques et obtenus par simple transposition de la première bande de fréquences d'émission.

Les premières liaisons descendantes 20, 22 se distinguent entre elles par les conditions de propagation et les temps de propagation du même signal radioélectrique émis par le satellite 10 qui diffèrent selon la position géographique du terminal correspondant 6, 8 en réception.

La deuxième voie 14 du premier terminal 6 et la troisième voie 16 du deuxième terminal 8 constituent une voie de retour et se composent de deuxièmes liaisons montantes 24, 26 partant des terminaux pour aller au satellite 10, d'une deuxième liaison montante différente correspondant à chaque terminal 6, 8 et fonctionnant dans une même deuxième bande d'émission, par exemple une deuxième sous-bande de la bande L, et d'une même liaison descendante 28 fonctionnant dans une deuxième bande de réception, par exemple dans une deuxième sous-bande de la bande C, partant du satellite 10 pour aller vers la station 4.

Les deuxièmes liaisons montantes 24, 26 se distinguent entre elles par des signaux émis depuis chacun des terminaux différents 6, 8.

Les deuxièmes liaisons montantes 24, 26 se distinguent également entre elles par des conditions de propagation et des temps de propagation des signaux radioélectriques qui diffèrent selon la position géographique du terminal correspondant 6, 8 en émission.

Le signal radioélectrique la deuxième liaison descendante 28 est obtenu par transposition de la deuxième bande de fréquences d'émission de l'ensemble des signaux reçus par le satellite 10 correspondants aux deuxièmes liaisons montantes 24, 26.

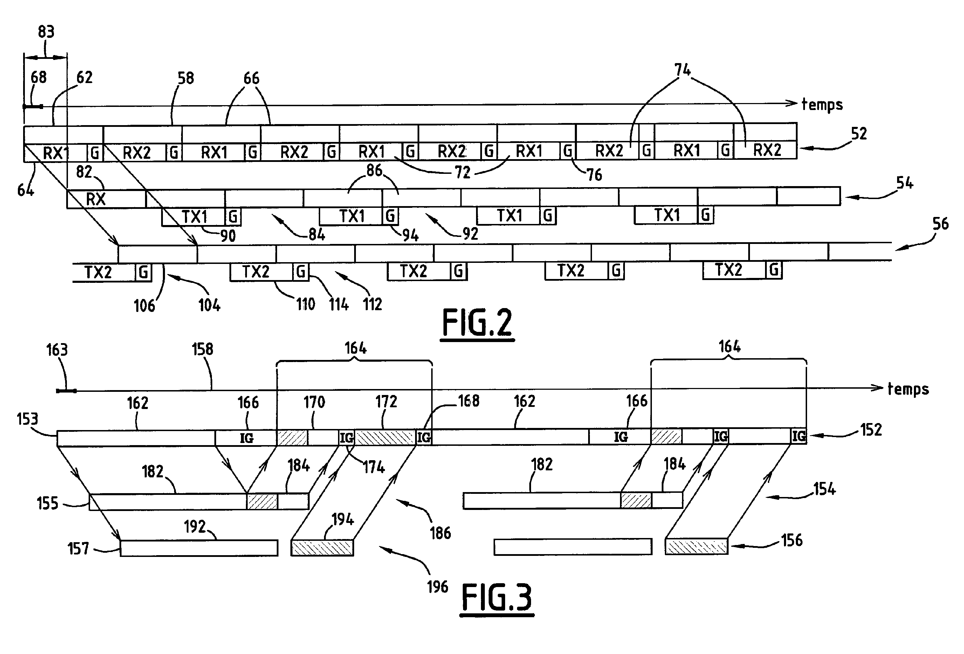

Suivant la figure 2, un diagramme temporel classique des moments d'émission et de réception des différents éléments du système de la figure 1 est décrit pour une configuration dans laquelle les premiers terminaux sont des terminaux classiques et l'accès au niveau de la station centrale est de type FDD.

Dans cette configuration, les bandes d'émission et de réception de la station centrale 4, c'est-à-dire la première bande d'émission et la deuxième bande de réception sont différentes.

En outre, l'accès à la voie aller 12 et à la voie retour 14 au niveau de la station 4 est mis en oeuvre à l'aide d'un duplexeur fréquentiel.

Dans cette configuration, les premier et deuxième terminaux 6, 8 sont aptes à émettre sur la même bande d'émission montante et à recevoir sur la même bande de réception descendante, les bandes d'émission montante et de réception descendante étant différentes.

En outre, le premier et le deuxième terminaux 6, 8 comprennent chacun un duplexeur fréquentiel leur permettant de fonctionner en FDD. Ainsi, les bandes d'émission montante et de réception descendante d'un même terminal sont différentes et suffisamment isolés pour ne pas interférer entre elles.

Suivant la figure 2, trois niveaux de trames sont représentés, un premier niveau 52 correspondant à deux trames temporelles émises et reçues de la station 4, un deuxième niveau 54 correspondant à deux trames temporelles émises et reçues du premier terminal 6 et un troisième niveau 56 correspondant à deux trames temporelles émises et reçues du deuxième terminal 8.

Chaque niveau décrit des évolutions de trames temporelles suivant un axe de référence temporel commun 58.

Le premier niveau 52 comprend une première trame 62 contenant les moments d'émission de la station 4 et une deuxième trame 64 contenant les moments de réception au niveau de la station 4 associée à la bande de réception de la station.

La première trame 62 comprend une succession de tranches d'émission 66 de durées égales, ici à cinq intervalles de temps unitaires, un intervalle de temps unitaire 68 étant une période de temps prédéterminé.

Les tranches temporelles d'émission 66 selon le cas peuvent être destinées à un seul terminal ou aux deux mais sont aptes à être reçus par les deux terminaux 6 et 8.

La deuxième trame 64 comprend une succession alternée de tranches temporelles de réception 72 destinées à recevoir les salves issues du premier terminal 6 et de tranches temporelles de réception 74 destinées à recevoir les salves issues du deuxième terminal 8.

Les tranches temporelles de réception 72 et 74 ont ici une même durée égale à cinq intervalles de temps unitaires. Deux tranches temporelles de réception consécutives 72 et 74 sont séparées par un intervalle de temps de garde 76 égal à un intervalle de temps unitaire 68.

Le deuxième niveau 54 comprend une troisième trame 82 des moments de réception par le premier terminal 6 du signal émis par la station 4 et une quatrième trame 84 des moments d'émission de salves d'émissions par le premier terminal 6 vers la station 4.

La troisième trame 82 comprend une succession de tranches temporelles de réception 86 correspondant aux tranches temporelles d'émission 66 de la première trame 62 avec un temps de retard 83 égal au temps de propagation de la voie aller depuis la station 4 jusqu'au premier terminal 6.

Suivant la figure 2, le temps de propagation de la voie aller 83 depuis la station 4 jusqu'au premier terminal 6 est égal à deux intervalles de temps unitaires 68.

La quatrième trame 84 comprend une succession alternée de salves d'émission 90 et d'intervalles de silence 92, chaque intervalle de silence contenant à son début un intervalle de garde 94 correspondant à l'intervalle de temps de garde 76 de la deuxième trame.

Le début d'émission d'une salve d'émission 90 est décalé par rapport au début de la première tranche temporelle de réception correspondante 72 d'un retard de durée égale au temps de propagation de la voie retour depuis le premier terminal 6 jusqu'à la station 4, c'est à dire ici deux intervalles de temps unitaires 68.

Le troisième niveau 56 comprend une cinquième trame 102 des moments de réception par le deuxième terminal 8 des signaux émis par la station 4 et une sixième trame 104 des moments d'émission de salves d'émissions par le deuxième terminal 8 vers la station 4.

La troisième trame 102 comprend une succession de tranches temporelles de réception 106 correspondant aux tranches temporelles d'émission 66 de la première trame 62 avec un temps de retard égal au temps de propagation de la voie aller depuis la station 4 jusqu'au deuxième terminal 8. Suivant la figure 2, le temps de propagation de la voie aller depuis la station 4 jusqu'au deuxième terminal 8 est égal quatre intervalles de temps unitaires 68.

La sixième trame 104 comprend une succession alternée de salves d'émission 110 et d'intervalles de silence 112, chaque intervalle de silence 112 contenant à son début un intervalle de garde 114 correspondant à l'intervalle de temps de garde 76 de la deuxième trame 64.

Le début d'émission d'une salve d'émission 110 est décalé par rapport au début de la deuxième tranche temporelle de réception correspondante 74 d'un retard de durée égale au temps de propagation de la voie retour depuis le deuxième terminal 8 jusqu'à la station 4, c'est à dire ici quatre intervalles de temps unitaires.

Les temps de garde sont rendus nécessaires du fait de l'étalement sur l'ensemble des terminaux des retards de propagation entre la station 4 et les terminaux 6, 8 affectant la voie retour, ainsi que des erreurs de synchronisation dues aux erreurs dues à la mobilité des terminaux, du satellite et de la station centrale.

Suivant la figure 3, un diagramme temporel classique des moments d'émission et de réception des différents éléments du système de la figure 1 est décrit pour une configuration dans laquelle les terminaux sont des terminaux classiques et l'accès au niveau de la station centrale est de type TDD simple.

Dans cette configuration, les bandes d'émission et de réception de la station centrale 4 sont les mêmes, c'est-à-dire la première bande d'émission et la deuxième bande de réception sont identiques.

Dans cette configuration, les premier et deuxième terminaux 6, 8 sont aptes à émettre sur la même bande d'émission et à recevoir sur la même bande réception.

En outre, et à l'inverse de la configuration décrite à la figure 2, le premier et le deuxième terminaux 6, 8 comprennent une unité de gestion de l'accès à la voie aller et la voie retour de type TDD simple, du fait que les bandes d'émission et de réception d'un même terminal sont nécessairement identiques.

Suivant la figure 3, trois niveaux de trames sont représentés, un premier niveau 152 correspondant à une première trame temporelle unique 153 des moments d'émission et de réception de la station 4, un deuxième niveau 154 correspondant à une deuxième trame unique 155 des moments d'émission et de réception du premier terminal 6 et un troisième niveau 156 correspondant à une troisième trame unique 157 d'émission et de réception du deuxième terminal 8.

Chaque niveau décrit des évolutions de trames temporelles suivant un axe de référence temporel commun 158.

La première trame 153 comprend une succession alternée de salves d'émission 162 et de paires 164 de tranches temporelles de réception.

La durée d'une salve d'émission est ici égale à dix intervalles de temps unitaires, l'intervalle de temps unitaire 163 étant une période de temps prédéterminée et la durée d'une paire 164 de tranches temporelles de réception 164 étant égale à dix intervalles de temps unitaires.

La fin de chaque salve d'émission 162 est séparée de la paire 164 suivante de tranches temporelles de réception par un premier intervalle de temps de garde 166 d'une durée égale à quatre intervalles de temps unitaires 163.

Les salves d'émission 162 selon le cas peuvent être destinées à un seul terminal ou aux deux mais sont aptes à être reçus par les deux terminaux 6 et 8.

Chaque paire 164 de tranches temporelles de réception comprend une première tranche temporelle de réception 170 allouée correspondant à la réception d'une salve émise par le premier terminal 6 et une deuxième tranche temporelle de réception 172 allouée correspondant à la réception d'une salve émise par le deuxième terminal 8.

La fin de chaque tanche temporelle de réception 170, 172 est terminée par un deuxième intervalle de temps de garde 174.

Les durées des première et deuxième tranches temporelles de réception 170, 172 sont égales à quatre intervalles de temps unitaires tandis la durée du deuxième intervalle de temps de garde 174 est égale à un intervalle de temps unitaire 163.

L'utilisation effective des tranches de temps est représentée sur la figure 3 par des hachures selon un premier motif inscrites dans la première tranche temporelle de réception 170 correspondant à une salve émise par le premier terminal 6 et par des hachures selon un deuxième motif inscrites dans la deuxième tranche temporelle de réception 172 correspondant à une salve émise par le deuxième terminal 8.

Dans l'exemple de la figure 3, la durée effective d'utilisation de la première tranche temporelle de réception correspondant au premier terminal 6 est égale à deux intervalles de temps unitaires 163 tandis que la durée effective d'utilisation de la deuxième tranche temporelle de réception 172 correspondant au deuxième terminal 8 est égale à quatre intervalles de temps unitaires 163.

La deuxième trame 155 comprend une succession alternée de tranches temporelles de réception 182, correspondant aux salves d'émission 162 de la première trame 152 et retardée par un temps de retard égal au temps de propagation de la voie aller depuis la station 4 jusqu'au premier terminal 6, de salves d'émission 184 destinées à être reçues dans les premières tranches temporelles de réception 170 de la première trame 152, et d'intervalles de silence 186.

Suivant la figure 3, le temps de propagation de la voie aller depuis la station 4 jusqu'au premier terminal 6 est égal deux intervalles de temps unitaires 163.

Le début d'émission d'une salve d'émission 184 est décalé par rapport au début de la tranche temporelle de réception correspondante 170 de la première trame 152 d'un retard de durée égale au temps de propagation de la voie retour depuis le premier terminal 6 jusqu'à la station 4, c'est à dire ici deux intervalles de temps unitaires. Il est à noter ici que le temps de garde 166 a été déterminé de manière à permettre le décalage de la salve d'émission 184 sans qu'elle chevauche la tranche temporelle de réception 182.

Le hachurage selon un premier motif du début de la tranche temporelle d'émission 184 allouée correspond à une émission effective d'une salve par le premier terminal 6. Ici l'émission effective d'une salve d'émission 184 n'est pas maximale puisque deux intervalles de temps unitaires sont utilisés au lieu de quatre.

La troisième trame 157 comprend une succession alternée de tranches temporelles de réception 192 destinées à recevoir les salves d'émission 162 de la première trame 152 avec un temps de retard égal au temps de propagation de la voie aller depuis la station 4 jusqu'au deuxième terminal 8, des salves d'émission 194 correspondant aux tranches temporelles de réception 172 de la première trame 152, et d'intervalles de silence 196..

Suivant la figure 3, le temps de propagation de la voie aller depuis la station 4 jusqu'au deuxième terminal 8 est égal à quatre intervalles de temps unitaires.

Le début d'émission d'une salve d'émission 194 est décalé par rapport au début de la première tranche temporelle de réception correspondante 172 de la première trame 153 d'un retard de durée égale au temps de propagation de la voie retour depuis le deuxième terminal 8 jusqu'à la station 4, c'est à dire ici quatre intervalles de temps unitaires. Il est à noter ici que, du fait de l'existence du deuxième temps de garde 174, le risque de chevauchement de la tranche temporelle de réception 192 est encore plus faible que dans le cas de la première trame 155.

Le hachurage selon un deuxième motif de la totalité de la salve d"émission 194 allouée correspond à une utilisation effective maximale par le terminal 8 de la salve d'émission 194 maximale.

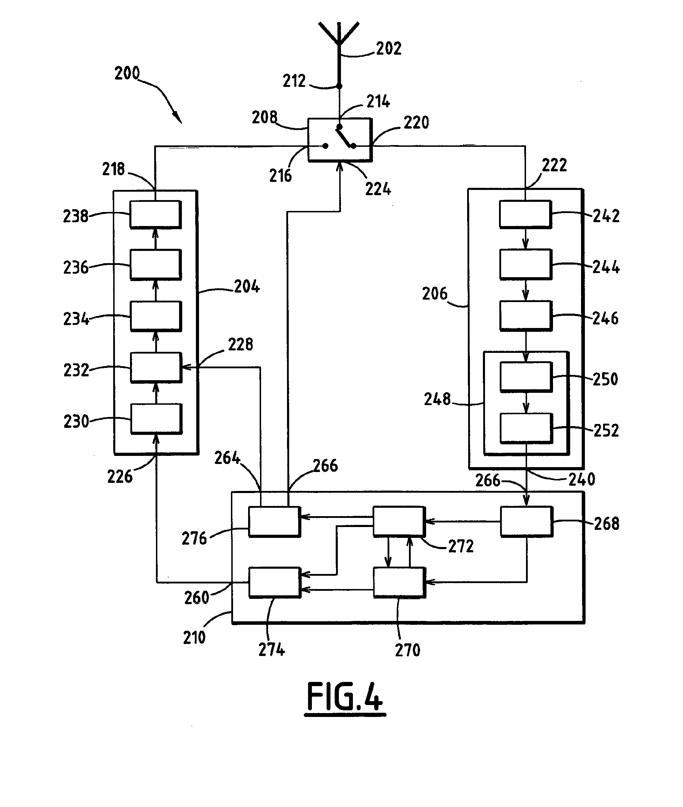

Suivant la figure 4, un terminal 200 selon l'invention comprend une antenne radiofréquence unique 202 large bande, accordée à la fois à la bande d'émission et à la bande de réception du terminal, un émetteur radiofréquence 204, un récepteur radiofréquence 206 et un commutateur électronique 208 propre relier 202 à 204 ou 206.

Le terminal 200 comprend également une unité de coordination 210 apte à traiter des données utiles de communication en émission et en réception, apte à traiter de la signalisation, à commander les moments d'émission de l'émetteur 204, les moments de réception du récepteur 206 et les commutations de l'interrupteur électronique 208.

L'antenne radiofréquence 202 comprend une borne unique d'entrée/sortie radiofréquence 212. Elle est apte, par exemple, à recevoir un signal de liaison descendante dans une bande de fréquences comprise entre 1626,5 MHz et 1660,5 MHz et à émettre un signal de liaison montante à une bande de fréquences comprise entre 1525 MHz et 1559 MHz.

Le commutateur électronique 208 comprend une sortie 214 raccordée à la borne d'entrée/sortie 212 de l'antenne 202, une première entrée radiofréquence 216 raccordée à une sortie radiofréquence 218 de l'émetteur 204, une deuxième entrée radiofréquence 220 raccordée à une sortie radiofréquence 222 du récepteur 206 et une troisième entrée de commande 224 raccordé à l'unité de coordination 210.

Le commutateur 208 est apte à connecter sélectivement la sortie radiofréquence 214 soit à la première entrée radiofréquence 216, soit à la deuxième entrée radiofréquence en fonction d'un signal fourni à l'entrée de commande 224 par l'unité de coordination 210.

L'émetteur 204 comprend une première entrée 226, connectée à l'unité de coordination 210 et apte à recevoir un signal numérique sous forme par exemple de données binaires, et une deuxième entrée 228 de commande apte à recevoir des informations de masquage temporel des moments d'émission à l'intérieur d'une tranche temporelle de réception.

L'émetteur 204 comprend en série depuis la première entrée 226 jusqu'à la sortie radiofréquence 218 une unité de codage 230, une unité de séquençage 232 de salves d'émission, un modulateur 234, un amplificateur de puissance 236 pour amplifier un signal radiofréquence fourni en sortie par le modulateur 234 et un filtre de sortie 238 destiné à filtrer les émissions de rayonnements parasites.

L'unité de codage 230 est une unité de codage classique apte à encoder un train de données binaires en des paquets de symboles destinés au modulateur 234 au travers d'un ou une combinaison de plusieurs moyens de codage comme par exemple un code correcteur d'erreur, un répéteur de mots, une unité d'entrelacement.

L'unité de séquençage 232 de salves d'émission est connectée à la deuxième entrée de commande 228. Elle est apte à recevoir des informations de masquage temporel.

L'unité de séquençage 232 est apte à répartir des salves de symboles à émettre dans une tranche temporelle de réception selon une succession de tranches temporelles d'émission déterminées en fonction des informations de masquage temporel fournies à la deuxième entrée 228.

Le modulateur 234 est ici un modulateur à conversion directe mais il pourrait être également un modulateur à conversion hétérodyne.

Le récepteur 206 comprend une borne de sortie 240 connectée à l'unité de coordination 208.

Le récepteur 206 est apte par la borne de sortie 240 à fournir à l'unité de coordination 208 un signal numérique sous la forme par exemple d'une série de données binaires.

Le récepteur 206 comprend en série, depuis l'entrée radiofréquence 222 jusqu'à la borne de sortie 240, un filtre de canal radiofréquence 242, un amplificateur radiofréquence à faible bruit 244, un démodulateur 246 et une unité de décodage globale 248.

Le récepteur 206 est apte à recevoir un message de communication émis par la station 4 au travers de l'antenne 202, du filtre de canal 242 et de l'amplificateur à faible bruit 244 dans des tranches temporelles de réception déminées à partir de données de signalisation comme par exemple des données de synchronisation d'accès et de configuration des accès du système de communication.

Le récepteur 206, à l'aide du démodulateur 246, est apte à démoduler le signal radiofréquence reçu dans une tranche temporelle de réception en une suite ou un bloc de symboles d'information cadencée à un débit symbole noté Rs.

Le démodulateur 246 est ici un démodulateur à conversion directe mais il peut être également un démodulateur à conversion hétérodyne.

L'unité de décodage globale 248 est associée à un codage global prédéterminée correspondant à un codage global utilisé par la station centrale 4 sur la voie aller 12.

L'unité de décodage globale 248 est apte à décoder la suite de symboles démodulés par le démodulateur 246 dans chaque tranche temporelle.

Chaque tranche temporelle de réception a une même durée Tb et chaque bloc contient un même nombre prédéterminé Ns de symboles.

L'unité de décodage globale 248 est apte à corriger par bloc de symboles un nombre maximal de symboles erronés consécutifs.

L'unité de décodage globale 248 comprend ici une unité 250 pour désentrelacer un bloc de symboles selon une période d'entrelacement prédéterminé Te et un décodeur 252 associé à un code correcteur d'erreur prédéterminé compris dans l'ensemble des codes par bloc et des codes par convolution.

Le décodeur correcteur d'erreurs est associé à un code correcteur d'erreur compris dans l'ensemble des codes à vérification de parité à faible densité (LDPC), des turbo-codes, des codes Reed-Solomon (RS), des codes à treillis, des codes concaténés, des codes LT (Luby Transform), des codes Raptor.

Typiquement, l'unité de décodage 248 est apte à mettre en oeuvre des mécanismes pour désentrelacer et de décodage similaires aux mécanismes utilisés dans les transmissions pour les mobiles pour compenser l'effet des évanouissements. Les mécanismes d'entrelacement sont connus pour répartir le erreurs sur une trame temporelle de manière uniforme.

Ici, l'unité pour désentrelacer 250 et le décodeur 252 associés à un codage global sont aptes à corriger des erreurs pouvant être consécutives sur 40% du temps de la trame.

En variante, l'unité de décodage globale comprend un décodeur correcteur seulement sans entrelacement.

En variante, l'unité de décodage globale 248 comprend au moins un décodeur de type à vote majoritaire associé à un code par répétition de paquet.

L'unité de coordination 210 comprend une première sortie 260, une deuxième sortie 264, une troisième sortie, une entrée 266 respectivement connectées à la première entrée 226 de l'émetteur, à la deuxième entrée 228 de l'émetteur, à l'entrée de commande 224 de l'interrupteur électronique 28, à la borne de sortie 240 du récepteur 206.

L'unité de coordination 210 comprend une unité de tri et d'aiguillage 268 de données de service et de signalisation connectée en entrée à la borne d'entrée 240 du récepteur 206, une unité de gestion des données de service 270 et une unité de gestion de la signalisation 272 connectées respectivement à une première et deuxième sorties de l'unité de tri 268, une unité de tramage 274 des donnés d'émission connectée en entrée à une sortie respective des unités 270, 272, une unité de gestion et de commande d'accès bidirectionnel 276.

L'unité de gestion et de commande d'accès bidirectionnel 274 est apte à préparer le séquençage des moments d'émission et de réception des messages à émettre et des messages reçus dans chaque tranche temporelle de réception selon les règles suivantes.

Un message à émettre est compris dans au moins une tranche temporelle d'émission.

Chaque tranche temporelle d'émission comprend au moins un intervalle de temps d'émission associé à une tranche de réception temporelle.

La durée totale des intervalles d'émission ayant lieu dans l'intervalle de temps de réception d'un même bloc est inférieure ou égale à la durée correspondant au nombre maximal de symboles erronés consécutifs, ce nombre dépendant du type de décodage global utilisé.

L'unité de gestion d'accès bidirectionnel 274 est apte à commander l'émetteur 204 et le récepteur 206 pour recevoir et émettre aux moments de réception et d'émission déterminés lors de la préparation du séquençage selon les règles décrites ci-dessus.

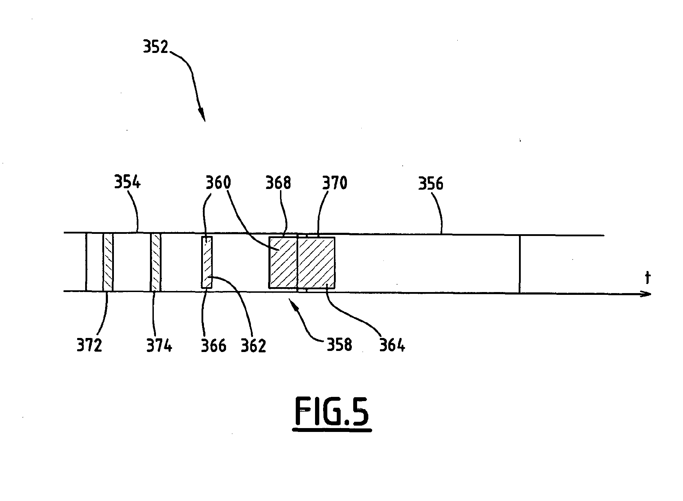

Suivant la figure 5, une illustration des règles d'élaboration du plan des moments d'émission et de réception suivant laquelle deux tranches temporelles de réception 354, 356 de réception consécutives d'une trame temporelle de réception 352 de la voie aller est représentée.

La première tranche temporelle de réception 354 correspond à la réception d'un premier bloc de symboles démodulés et la deuxième tranche temporelle de réception 356 correspond à la réception d'un deuxième bloc.

Une trame temporelle d'émission 358 de la voie retour comprend des tranches temporelles d'émission représentées par des cadres inscrits dans la trame temporelle de réception de manière à faire apparaître la simultanéité de moments d'émission et de réception lorsqu'ils existent.

Dans chaque tranche temporelle d'émission, des salves d'émission sont représentées par des hachures selon un motif identifiant le message émis.

Ici, deux salves correspondant à un même message 360 sont émises dans une première tranche temporelle d'émission 362 et une deuxième tranche d'émission 364, distinctes entre elles c'est-à-dire séparées dans le temps.

La première salve est inscrite dans un premier intervalle de temps d'émission 366 confondu avec la première tranche temporelle d'émission 362. La tranche temporelle d'émission 362 est contenue intégralement dans la première tranche temporelle de réception 354.

La deuxième salve est inscrite dans la deuxième tranche temporelle d'émission 364 formée d'un deuxième et d'un troisième intervalle de temps 368, 370 adjacents, le deuxième intervalle de temps 368, respectivement le troisième 370 étant inscrits dans la première tranche de réception 354, respectivement la deuxième tranche de réception 356.

Suivant la figure 5, la première tranche de temps de réception 354 comprend deux intervalles de temps d'évanouissement 372, 374 disjoints correspondant à des évanouissements ayant pour origine les conditions de propagation sur la liaison descendante de la voie aller.

La capacité de correction de l'unité de décodage globale, correspondant à la durée d'un paquet maximal de symboles erronés consécutifs par bloc, est telle que la somme des durées des deux intervalles de temps d'évanouissement 372, 374, du premier intervalle de temps d'émission 366, et du deuxième intervalle de temps d'émission est égale à la durée d'un paquet maximal de symboles erronés consécutifs.

Ainsi, un accès bidirectionnel est réalisé dans lequel des émissions de salves par l'émetteur ont lieu en même temps que les réceptions par le récepteur des messages de la voie aller, la voie aller étant perturbée le cas échéant par des évanouissements et dans lequel le message de la voie aller est reçu correctement sans erreur.

En pratique, le système de transmission est dimensionné de telle sorte que la somme de la durée moyenne d'évanouissements causés par les conditions de propagation et de la durée des intervalles d'émission contenu dans la tranche temporelle de réception d'un même bloc est égale à la capacité de correction de l'unité de décodage globale en terme de durée d'un paquet maximal des symboles erronés consécutifs par bloc.

Ici, la deuxième tranche temporelle de réception 356 ne comprend pas d'évanouissement et la durée du troisième intervalle d'émission 370 est inférieure à la durée d'un paquet maximal des symboles erronés consécutifs par bloc pouvant être corrigé par l'unité de décodage globale 248.

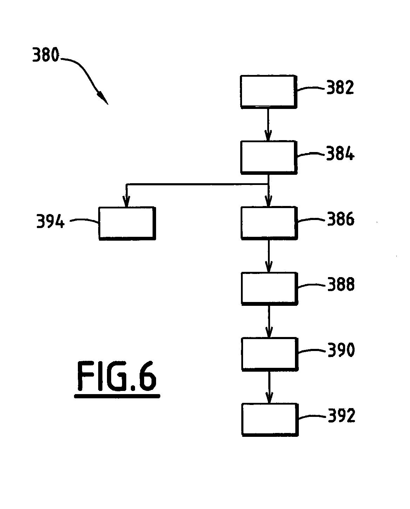

Suivant la figure 6, le procédé d'accès bidirectionnel, mis en oeuvre par le terminal décrit à la figure 4, comprend un ensemble d'étapes successives.

Dans une étape 382 de préparation, l'unité de gestion et de commande d'accès 276 détermine un plan des moments d'émission et des moments de réception des messages échangés pour chaque tranche temporelle de réception, une synchronisation de la base de temps du terminal avec la séquence des tranches temporelles de réception ayant été effectué au préalable.

Le plan des moments d'émission et des moments de réception est déterminé de sorte que le message à émettre est compris dans au moins une tranche temporelle d'émission ininterrompue et distincte, chaque tranche temporelle comprenant au moins un intervalle de temps d'émission associé à une tranche de réception, et de sorte que la durée totale des intervalles de temps d'émission contenus dans la même tranche temporelle de réception est inférieure ou égale à la durée correspondant au nombre maximal prédéterminé de symboles erronés consécutifs.

Dans une étape 384 d'activation, l'unité de gestion et de commande d'accès 276 commande l'émetteur et le récepteur de sorte à exécuter le plan des émissions et des réceptions déterminé à l'étape 382 au rythme de l'écoulement de chaque tranche temporelle de réception.

Dans une étape 386 suivante, le récepteur 206 reçoit dans une tranche temporelle de réception le message de communication émis par la station au travers de l'antenne 202 puis de l'interrupteur électronique 210.

Dans une étape suivante 388, le signal reçu dans la tranche temporelle de réception est filtré par le filtre 242 puis amplifié par l'amplificateur à faible bruit 244.

Puis dans une étape 390, le premier signal filtré est démodulé par un démodulateur en une suite ou un bloc de symboles d'information cadencée à un débit symbole Rs.

Dans une étape suivante 392, la suite de symboles d'informations est décodée pas l'unité de décodage globale 248 associée à un codage global prédéterminé. L'unité de décodage globale décode la suite de symboles démodulés.

Le décodage est conçu de sorte à corriger par bloc de symboles jusqu'à un nombre maximal de symboles erronés consécutifs formant un paquet maximal de symboles erronés consécutifs.

Dans une étape d'émission 394, consécutive à l'étape 384 et exécutée de manière synchrone en parallèle de l'étape 386, l'émetteur émet le message à émettre vers la station suivant le plan des moments d'émission élaboré à l'étape 382.

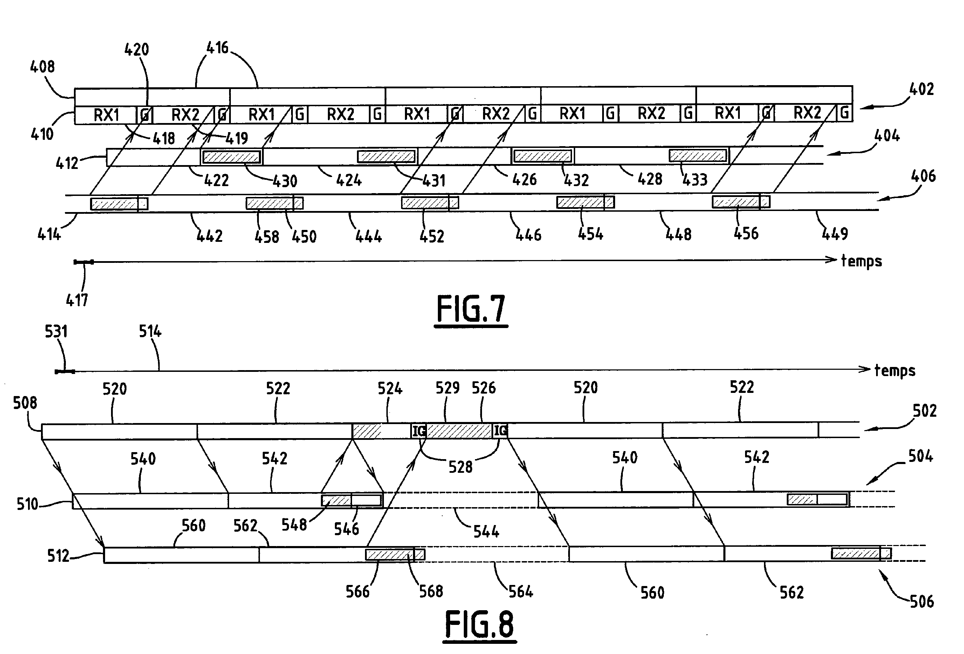

Suivant la figure 7, un diagramme temporel des moments d'émission et de réception des différents éléments du système de la figure 1 est décrit pour une configuration dans laquelle les terminaux sont des terminaux de type décrit à la figure 4 et l'accès au niveau de la station centrale 4 est de type FDD.

Dans cette configuration et à l'instar de la configuration classique décrite à la figure 2, les bandes d'émission et de réception de la station centrale 4, c'est à dire la première bande d'émission et la deuxième bande de réception, sont différentes.

De même, l'accès à la voie aller 12 et à la voie retour 14 au niveau de la station 4 est effectué à l'aide d'un duplexeur fréquentiel.

De même, les premier et deuxième terminaux 6, 8 sont aptes à émettre sur la même bande d'émission et à recevoir sur la même bande réception.

A l'inverse de la configuration classique décrite à la figure 2, et bien que les bandes d'émission et de réception d'un même terminal sont différentes, les premier et deuxième terminaux 6, 8 sont dépourvus à dessein de duplexeur fréquentiel leur permettant de fonctionner en FDD lorsque l'isolation des bandes émission et réception est insuffisante.

Suivant la figure 7, trois niveaux de trames 402, 404, 406 sont représentés.

Le premier niveau 402 comprend une première trame 408 des moments d'émission de la station 4 et une deuxième trame 410 des moments de réception au niveau de la station 4.

Le deuxième niveau 404 comprend une troisième trame 412 des moments de réception et d'émission par le premier terminal 6 et le troisième niveau 406 comprend une quatrième trame 414 des moments de réception et d'émission par le deuxième terminal 8.

La première trame 408 comprend une émission ininterrompue de messages de voie aller suivant une séquence de tranches temporelles d'émission 416 de durée égale, ici à dix intervalles de temps unitaires, un intervalle de temps unitaire 417 étant une période de temps prédéterminé.

Les tranches temporelles d'émission 416 selon le cas peuvent être destinées à un seul terminal ou aux deux mais sont aptes à être reçus par les deux terminaux 6 et 8.

La deuxième trame 408 comprend une succession alternée de premières tranches temporelles de réception 418 associés aux salves émises par le premier terminal 6 et de deuxièmes tranches temporelles de réception 419 associées aux salves d'émission du deuxième terminal 8.

Les tranches temporelles de réception 418 et 419 ont une même durée égale à quatre intervalles de temps unitaires 417. Deux tranches temporelles de réception consécutives 418 et 419 sont séparées par un intervalle de temps de garde 420 égal à un intervalle de temps unitaire 417.

La troisième trame 412 comprend une succession de tranches temporelles de réception successives 422, 424, 426, 428 agencées de manière continue sans interruption correspondant à l'émission ininterrompu selon les tranches temporelles d'émission 416 de la première trame 402 avec un temps de retard égal au temps de propagation de la voie aller depuis la station 4 jusqu'au premier terminal 6. A l'instar de la figure 2, le temps de propagation de la voie aller depuis la station 4 jusqu'au premier terminal 6 est égal deux intervalles de temps unitaire.

Pendant et avant l'achèvement de chacune des tranches temporelles de réception 422, 424, 426, 428, une salve d'émission respective 430, 431, 432, 433 est émise par le terminal 6 de durée égale à quatre intervalles de temps unitaires.

Le début d'émission d'une salve d'émission 430, 431, 432, 433 est décalé par rapport au début de la tranche temporelle de réception correspondante 418 d'un retard de durée égale au temps de propagation de la voie retour depuis le premier terminal 6 jusqu'à la station 4, c'est-à-dire ici deux intervalles de temps unitaires.

La quatrième trame 414 comprend une succession de tranches temporelles de réception successives 442, 444, 446, 448 agencées de manière continue sans interruption et destinées à recevoir l'émission ininterrompue depuis la station 4 suivant les tranches temporelles d'émission 416 de la première trame 402 avec un temps de retard égal au temps de propagation de la voie aller depuis la station 4 jusqu'au deuxième terminal 8. A l'instar de la figure 2, le temps de propagation de la voie aller depuis la station 4 jusqu'au deuxième terminal 8 est égal à quatre intervalles de temps unitaire.

A cheval sur chacune des paires de tranches temporelles de réception consécutives 442, 444, 446, 448, 449 , une salve d'émission respective 450, 452, 454, 456 est émise par le deuxième terminal 8 de durée égale à quatre intervalles de temps unitaires. Ainsi, la salve d'émission 450 comprend trois intervalles de temps unitaires à la fin de la tranche temporelle de réception 442 et un intervalle de temps unitaire au début de la tranche temporelle de réception 444. La répartition respective des durées de chevauchement des salves d'émission restantes 452, 454, 456 est identique à celle de la salve d'émission 450.

Le début d'émission d'une salve d'émission 450, 452, 454, 456 est décalé par rapport au début de la deuxième tranche de réception correspondante 419 d'une retard ayant une durée égale au temps de propagation de la voie retour depuis le deuxième terminal 8 jusqu'à la station 4, c'est à dire ici quatre intervalles de temps unitaires.

La capacité de décodage de paquet d'erreurs par salve de réception 422, 424, 426, 428 étant ici supposée égale au nombre de symboles correspondant à la somme des durées des émissions ayant lieu pendant une même tranche de réception, c'est-à-dire ici la durée d'une seule salve d'émission 430, 431, 432, 433, la réception des messages de la station 4 est effectuée correctement par le premier terminal 6.

De même, la capacité de décodage de paquets d'erreurs par tranche temporelle de réception 442, 444, 446, 448 étant égale au nombre de symboles correspondant à la somme des durées des émissions ayant lieu pendant une même salve de réception, c'est-à-dire ici la somme d'un intervalle de temps unitaire en début de salve de réception et de trois intervalles de temps unitaires soit quatre intervalles de temps unitaires, la réception des messages émis par la station 4 est effectuée correctement par le deuxième terminal 6.

Ainsi, la transmission sur la voie aller et retour peut être effectuée correctement dans le cas où l'isolation au niveau du terminal entre les voies aller et retour n'est pas suffisante en raison de l'absence de duplexeur fréquentiel, sans induire des temps de garde supplémentaires au niveau de la station centrale.

La capacité est également augmentée dans le cas où de la bande prévue initialement pour isoler est alors utilisée pour transmettre.

Suivant la figure 8, un diagramme temporel des moments d'émission et de réception des différents éléments du système de la figure 1 est décrit pour une configuration dans laquelle les premiers terminaux sont des terminaux de type décrit à la figure 4 et dans laquelle l'accès au niveau de la station centrale 4 est de type TDD simple.

Dans cette configuration, les bandes d'émission et de réception de la station centrale 4 sont les mêmes, c'est à dire la première bande d'émission et la deuxième bande de réception sont identiques.

Dans cette configuration, les premier et deuxième terminaux 6, 8 sont aptes à émettre sur la même bande d'émission et à recevoir sur la même bande réception.

A l'instar de la figure 7, les premier et deuxième terminaux 6, 8 comprennent une unité de gestion et de commande 276 de l'accès à la voie aller et la voie retour.

Suivant la figure 8, trois niveaux de trames 502, 504, 506 sont représentés, un premier niveau 502 correspondant à une première trame temporelle 508 des moments d'émission et de réception de la station 4, un deuxième niveau 504 correspondant à une deuxième trame unique 510 des moments d'émission et de réception du premier terminal 6 et un troisième niveau 506 correspondant à une troisième trame unique 512 d'émission et de réception du deuxième terminal 8.

Chaque niveau décrit des évolutions de trames temporelles suivant un axe de référence temporel commun 514.

La première trame 508 comprend une succession alternée de paires de tranches de temps d'émission 520, 522 consécutives et ininterrompues et de paires de tranches de temps de réception 524, 526 successives et interrompues par un intervalle de temps de garde 528, la station 4 étant apte à recevoir dans les tranches de réception 524, 526 des salves émises respectivement par le premier 4 et le deuxième terminal 6.

La paire de tranches de réception 524, 536 et les temps de garde 528 forment un tranche de réception globale 529.

A l'instar de la figure 3, la fin de chaque tranche de temps de réception 524, 526 est terminée par un deuxième intervalle de temps de garde 528 de durée égale à un intervalle de temps unitaire 531.

La durée de chaque tranche d'émission 520, 522 est ici égale à dix intervalles de temps unitaires, l'intervalle de temps unitaire 531 étant une période de temps prédéterminée, la durée d'une tranche de temps globale 529 étant égale à dix intervalles de temps unitaires.

Les durées des première et deuxième tranches temporelles de réception 524, 526 sont égales quatre intervalles de temps unitaires.

A l'inverse de la figure 3, la fin de chaque salve d'émission 520, 522 est exempte du premier intervalle de temps de garde 166 d'une durée égale à quatre intervalles de temps unitaires.

Les salves d'émission formées par une paire de tranches temporelles d'émission 520, 522 peuvent selon le cas être destinées à un seul terminal ou aux deux mais sont aptes à être reçus par les deux terminaux 6 et 8.

L'utilisation effective des tranches temporelles de réception est représentée sur la figure 8 par des hachures selon un premier motif dans la première tranche temporelle de réception 524 correspondant au premier terminal 6 et par des hachures selon un deuxième motif dans la deuxième tranche temporelle de réception 526 correspondant au deuxième terminal 8.

Dans l'exemple de la figure 8 et l'instar de la figure 3, la durée effective de service utilisée correspondant au premier terminal 6 est égale à deux intervalles de temps unitaires tandis que la durée effective utilisée correspondant au deuxième terminal 8 est égale à quatre intervalles de temps unitaires.

La deuxième trame 510 comprend une succession alternée de paires de tranches de temps temporelles de réception 540, 542 correspondant à la salve d'émission formée par une paire de tranches d'émission 520, 522, et de tranches de réception supplémentaire 544 correspondant à une salve d'émission supplémentaire émise au niveau de la station et du satellite de manière suivant un degré de liberté de ressource de transmission différent de celui du temps comme par exemple une fréquence ou un code d'étalement.

La deuxième trame 510 comprend une succession de tranches d'émission 546 allouées et représentées par des cadres inscrits dans la trame de réception de manière à faire apparaître la simultanéité de moments d'émission et de réception lorsqu'ils existent. Ici, les tranches d'émission 546 sont chacune inscrites dans les deuxièmes tranches temporelles de réception 542.

Des salves d'émissions 548, représentées par un premier motif hachuré correspondant au premier terminal 6, sont ici émises dans une partie de début la tranche temporelle d'émission 546.

Le hachurage selon un premier motif du début de salve d"émision correspond à une utilisation effective par le terminal de la salve d'émission allouée, qui ici n'est pas maximale puisque deux intervalles de temps unitaires sont utilisés au lieu de quatre.

Le début des tranches d'émission allouées 546 sont décalées avec un temps de retard égal au temps de propagation de la voie aller depuis la station 4 jusqu'au premier terminal 6, par rapport aux tranches temporelles de réception 524 correspondantes de la première trame 152.

Suivant la figure 8, le temps de propagation de la voie retour depuis le premier terminal 6 jusqu'à la station 4 est égal à deux intervalles de temps unitaires 531.

La troisième trame 512 comprend une succession alternée de paires de tranches de temps de réception 560, 562 correspondant à la salve d'émission formé par les tranches 520, 522, et de tranches de réception supplémentaire 564 correspondant à une salve d'émission supplémentaire découplé au niveau de la station et du satellite par un degré de liberté de ressource de transmission différent du temps comme par exemple une fréquence, un code d'étalement.

La troisième trame 512 comprend une succession de tranches temporelles d'émission 566 allouées et représentées par des cadres inscrits dans la trame de réception de manière à faire apparaître la simultanéité de moments d'émission et de réception lorsqu'ils existent. Ici, les tranches d'émission 566 sont chacune inscrites en fin d'une deuxième tranche de réception 562 et en début d'une tranche supplémentaire adjacente 564.

Des salves d'émission 568, représentées par un deuxième motif hachuré correspondant au deuxième terminal 6, sont ici émises dans la totalité de la tranche d'émission 566.

Le hachurage selon un deuxième motif de la salve d"émision 568 correspond à une utilisation effective par le terminal de la totalité de la tranche de temps de réception 566 allouée qui est ici maximale puisque les quatre intervalles de temps unitaires sont utilisés.

Le début des tranches d'émission allouées 566 sont décalées avec un temps de retard égal au temps de propagation de la voie aller depuis le deuxième terminal 8 jusqu'à la station 4, par rapport aux tranches de réception 526 correspondantes de la première trame 508.

Suivant la figure 8, le temps de propagation de la voie retour depuis le deuxième terminal 8 jusqu'à la station 4 est égal à deux intervalles de temps unitaires 531.

Le terminal 200 permet de s'affranchir de l'utilisation d'un duplexeur fréquentiel dans chaque terminal dans le cas d'un accès de type FDD utilisé par la station centrale 4, ce qui permet de fabriquer un terminal moins complexe et moins couteux.

Le terminal 200 est apte à être utilisé sans un duplexeur fréquentiel indépendamment du système FDD ou TDD dans lequel il est utilisé.

Dans un système de type FDD décrit à la figure 7 et dans un système de type TDD décrit à la figure 8, un terminal 200 mettant en oeuvre un procédé décrit à la figure 6 permet de s'affranchir de l'utilisation d'un duplexeur fréquentiel au niveau du terminal et/ou de diminuer les temps de garde de la voie aller de la station, voire de les supprimer.

L'utilisation du terminal 200 permet également d'augmenter la capacité de transmission du système de communication.

L'utilisation d'un terminal 200 permet également de diminuer les temps de garde sur la voie aller de chaque terminal par rapport à un accès de type TTD.

Dans une variante, le système de communication est un système de transmission terrestre sans satellite.

Dans une variante, les voies aller et retour sont composées de liaisons à base de câbles pouvant être des câbles à fils conducteurs, des câbles coaxiaux ou des fibres optiques.

## Revendications

1. Terminal de communication destiné à émettre dans une bande d'émission et à recevoir dans une bande de réception des messages sur une liaison bidirectionnelle vers une station centrale (4) de communication comprenant :
un récepteur (206) apte à recevoir un premier signal de communication dans une ou plusieurs tranches temporels de réception (354, 356)consécutives, et à démoduler le signal reçu dans chaque tranche temporelle de réception (354, 356) prise parmi l'au moins une tranche temporelle de réception (354, 356) en une suite de symboles formant un bloc de symboles,
le récepteur (206) comportant une unité de décodage globale (248) associée à un codage global prédéterminé apte à corriger dans le bloc de symboles un nombre maximal prédéterminé de symboles erronés consécutifs, et
un émetteur (204) apte à émettre une deuxième message (360) de communication en même temps que le premier signal est reçu, et
une unité de gestion et de commande d'accès (276) apte à commander l'émetteur (204) pour émettre le deuxième message (360) dans une ou plusieurs tranches temporelles d'émission ininterrompues (362, 364), chaque tranche temporelle d'émission ininterrompue (362, 364) comprenant au moins un intervalle de temps d'émission (366, 368, 370), chaque intervalle de temps d'émission (366, 368, 370) étant inclus dans une tranche de réception (354, 356), chaque tranche temporelle d'émission ininterrompue (362, 364) étant incluse dans une tranche de réception (354) ou à cheval sur deux tranches de réception (354, 356) consécutives,
**caractérisé en ce que**
le terminal est dépourvu d'un duplexeur fréquentiel d'isolation des bandes d'émission et de réception, et
la durée totale des intervalles de temps d'émission (366, 368) contenus dans une même tranche temporelle de réception (354) est inférieure ou égale à la durée correspondant au nombre maximal prédéterminé de symboles erronés consécutifs que l'unité de décodage globale (248) associée à un codage global prédéterminé est apte à corriger.

2. Terminal selon la revendication 1, **caractérisé en ce que** la durée totale des intervalles de temps d'émission contenus dans la même tranche temporelle de réception (356) est égale à la durée correspondant au nombre maximal prédéterminé de symboles erronés consécutifs.

3. Terminal selon l'une quelconque des revendications 1 et 2, **caractérisé en ce qu'**un seul intervalle d'émission (370) est contenu dans la même tranche temporelle de réception (356).

4. Terminal selon l'une quelconque des revendications 1 à 3, **caractérisé en ce qu'**une tranche temporelle d'émission (364) comprend un premier intervalle d'émission (368) associé à une première tranche temporelle de réception (354) et adjacent à un deuxième intervalle d'émission (370) associé à une deuxième tranche temporelle de réception (356), les première et deuxième tranches temporelles de réception (354, 356) étant consécutives.

5. Terminal selon l'une quelconque des revendications 1 à 4, **caractérisé en ce que** les durées d'un symbole de la première suite de symboles et d'un symbole du deuxième message sont égales.

6. Terminal selon l'une quelconque des revendications 1 à 5 **caractérisé en ce que** la durée d'une tranche temporelle de réception quelconque (354, 356) est la même.

7. Terminal selon l'une quelconque des revendications 1 à 6, **caractérisé en ce que** l'unité de gestion et de commande d'accès (276) est apte à désactiver le récepteur (206) lorsque l'émetteur (204) émet de sorte à éviter un couplage électromagnétique entre l'émetteur (204) et le récepteur (206).

8. Terminal selon l'une quelconque des revendications 1 à 7, **caractérisé en ce qu'**il comprend une antenne (202) et un commutateur électronique (208) connecté à l'antenne (202), le commutateur (208) étant apte à déconnecter le récepteur (206) de l'antenne (202).

9. Terminal selon l'une quelconque des revendications 1 à 8, **caractérisé en ce qu'**il comprend un dispositif de protection contre les surcharges radiofréquences connecté à l'entrée du récepteur (206).

10. Terminal de communication selon l'une quelconque des revendications 1 à 9, **caractérisé en ce que** l'unité de décodage globale (248) associée à un codage global prédéterminé comprend un décodeur (252) associé à un code correcteur d'erreur compris dans l'ensemble des codes par bloc et des codes par convolution.

11. Terminal de communication selon l'une quelconque des revendications 1 à 10, **caractérisé en ce que** l'unité de décodage globale (252) associée à un codage global prédéterminé comprend au moins un décodeur correcteur d'erreurs (252) associé à un code correcteur d'erreur compris dans l'ensemble des codes à vérification de parité à faible densité, LDPC, des turbo-codes, des codes Reed-Solomon (RS), des codes à treillis, des codes concaténés, des codes LT, des codes Raptor.

12. Terminal de communication selon l'une quelconque des revendications 1 à 11, **caractérisé en ce que** l'unité de décodage globale (248) associée à un codage globale prédéterminé comprend au moins un décodeur de type à vote majoritaire associé à un code par répétition de paquet.

13. Terminal de communication selon l'une quelconque des revendications 1 à 12, **caractérisé en ce que** l'unité de décodage comprend une unité pour désentrelacer un bloc de symboles selon une période d'entrelacement Te.

14. Terminal de communication selon l'une quelconque des revendications 1 à 13, **caractérisé en ce que** l'unité de gestion de commande d'accès (276) est apte à recevoir des informations de retard de propagation et des consignes d'affection de ressources de transmission selon un schéma d'accès prédéterminé, et à déterminer la trame des émissions et des réceptions du terminal.

15. Terminal de communication selon l'une quelconque des revendications 1 à 14, **caractérisé en ce qu'**il comprend une unité de détermination de distance entre le terminal et la station centrale de communication apte à fournir des informations de retard de propagation.

16. Terminal de communication selon l'une quelconque des revendications 1 à 15, **caractérisé en ce que** la bande de fréquence de l'émetteur (204) et la bande de fréquence du récepteur (206) sont différentes de sorte que le terminal est apte à fonctionner dans un mode d'accès duplexé à la fois en temporel et en fréquentiel.

17. Terminal de communication selon l'une quelconque des revendications 1 à 15, **caractérisé en ce que** la bande de fréquence de l'émetteur (204) et la bande de fréquence du récepteur (206) sont les mêmes de sorte que le terminal est apte à fonctionner dans un mode d'accès duplexé seulement en temporel.

18. Procédé d'accès bidirectionnel destiné à un terminal de communication apte à émettre et à recevoir des messages sur une liaison bidirectionnelle vers et d'une station centrale (4) de communication comprenant les étapes consistant à :
recevoir (386) dans une ou plusieurs tranches temporelles de réception (354, 356) par un récepteur un premier signal de communication,
démoduler (390) par un démodulateur le signal reçu dans chaque tranche temporelle de réception (354, 356) prise parmi l'au moins une tranche temporelle de réception (354, 356) en une suite de symboles d'information formant un bloc de symboles,
décoder (392) par une unité de décodage globale (248) associée à un codage global prédéterminé le bloc de symboles démodulés et corriger le cas échéant un nombre de symbole erronés consécutifs pouvant atteindre un nombre maximal de symboles erronés consécutifs par bloc prédéterminé, et
émettre (394) par un émetteur un deuxième signal de communication en même temps que la réception du premier signal de communication, et
activer (384) par une unité de gestion et de commande d'accès (276) l'émetteur pour émettre le deuxième message (360) dans une ou plusieurs tranches temporelles d'émission ininterrompue (362, 364), chaque tranche temporelle d'émission ininterrompue (362, 364) comprenant au moins un intervalle de temps d'émission (366, 368, 370), chaque intervalle de temps d'émission (366, 368, 370) étant inclus dans une tranche de réception (354, 356), chaque tranche temporelle d'émission ininterrompue (362, 364) étant incluse dans une tranche de réception (354) ou à cheval sur deux tranches de réception (354, 356) consécutives, **caractérisé en ce que**
le terminal est dépourvu d'un duplexeur fréquentiel d'isolation des bandes d'émission et de réception, et
la durée totale des intervalles de temps d'émission (366, 368) contenus dans une même tranche temporelle de réception (354) est inferieure ou égale à la durée correspondant au nombre maximal prédéterminé de symboles erronés consécutifs que l'unité de décodage globale (248) associée à un codage global prédéterminé est apte à corriger.

19. Système de communication destiné à transférer sur une liaison bidirectionnelle des messages entre une station centrale (4) de communication et au moins un terminal de communication (6, 8), comprenant :
au moins un terminal de communication (200) tel que défini dans l'une quelconque des revendications 1 à 17,
une station centrale de communication (4) comportant une unité de codage globale correspondant à l'unité de décodage globale (248) du terminal (200) et une unité de gestion et de commande d'accès apte à gérer les accès des voies aller et retour vers et depuis les au moins un terminaux (200).

## Patentansprüche

1. Kommunikationsendgerät zum Senden in einem Sendeband und zum Empfangen in einem Empfangsband von Nachrichten über eine bidirektionale Verbindung in Richtung einer zentralen Kommunikationsstation (4) aufweisend:
einen Empfänger (206) eingerichtet zum Empfangen eines ersten Kommunikationssignals in einem oder mehreren konsekutiven Empfangszeitschlitzen (354, 356) und zum Demodulieren des Signals, das in jedem Empfangszeitschlitz (354, 356) unter den mindestens einem Empfangszeitschlitz (354, 356) empfangen wurde, in eine Symbolfolge, die einen Symbolblock bildet,
wobei der Empfänger (205) eine globale Dekodiereinheit (248) aufweist, die mit einem vorbestimmten globalen Code verknüpft ist, und die dazu geeignet ist, in dem Symbolblock eine vorgegebene maximale Zahl von konsekutiven fehlerhaften Symbolen zu korrigieren, und einen Sender (204), der eingerichtet ist, eine zweite Kommunikationsnachricht (360) zu der gleichen Zeit, zu der das erste Signal empfangen wird, zu senden, und eine Verwaltungs- und Zugriffssteuerungseinheit (276), die eingerichtet ist zum Steuern des Senders (204) zum Senden der zweiten Nachricht (360) in ein oder mehreren ununterbrochenen Sendezeitschlitzen (362, 364), wobei jeder ununterbrochene Sendezeitschlitz (362, 364) mindestens ein Sendezeitintervall (366, 368, 370) aufweist, wobei jedes Sendezeitintervall (366, 368, 370) in einem Empfangsschlitz (354, 356) enthalten ist, wobei jeder ununterbrochene Sendezeitschlitz (362, 364) in einem Empfangsschlitz (354) enthalten ist oder an der Grenze zwischen zwei konsekutiven Empfangsschlitzen (354, 356) liegt,
dadurch charakterisiert, dass das Endgerät einen Frequenzduplexer zur Isolation des Sendebandes und des Empfangsbandes entbehrt und
die Gesamtdauer der Sendezeitintervalle (366, 368), die in demselben Empfangszeitschlitz (354) enthalten sind, kleiner oder gleich der Dauer ist, die der vorgegebenen maximalen Anzahl von konsekutiven fehlerhaften Symbolen entspricht, die die globale Dekodiereinheit (248), die mit einem vorbestimmten globalen Code verknüpft ist, geeignet ist zu korrigieren.

2. Endgerät gemäß Anspruch 1, dadurch charakterisiert, dass die Gesamtdauer der Sendezeitintervalle, die in demselben Empfangszeitschlitz (356) enthalten sind, gleich der Dauer ist, die der vorgegebenen maximalen Anzahl von konsekutiven fehlerhaften Symbolen entspricht.

3. Endgerät gemäß einem der Ansprüche 1 und 2, dadurch charakterisiert, dass ein einziges Sendeintervall (370) in demselben Empfangszeitschlitz (356) enthalten ist.

4. Endgerät gemäß einem der Ansprüche 1 bis 3, dadurch charakterisiert, dass ein Sendezeitschlitz (364) ein erstes Sendeintervall (368) aufweist, das mit einem ersten Empfangszeitschlitz (354) verknüpft ist und an ein zweites Sendeintervall (370) angrenzt, das mit einem zweiten Empfangszeitschlitz (356) verknüpft ist, wobei der erste und der zweite Empfangszeitschlitz (354, 356) konsekutiv sind.

5. Endgerät gemäß einem der Ansprüche 1 bis 4, dadurch charakterisiert, dass die Dauer eines Symbols der ersten Symbolfolge und die Dauer eines Symbols der zweiten Nachricht gleich sind.

6. Endgerät gemäß einem der Ansprüche 1 bis 5, dadurch charakterisiert, dass die Dauer eines beliebigen Empfangszeitschlitzes (354, 356) dieselbe ist.

7. Endgerät gemäß einem der Ansprüche 1 bis 6, dadurch charakterisiert, dass die Verwaltungs- und Zugriffssteuerungseinheit (276) eingerichtet ist, den Empfänger (206) zu deaktivieren, wenn der Sender (204) sendet, so dass eine elektromagnetischen Kopplung zwischen dem Sender (204) und dem Empfänger (206) vermieden wird.

8. Endgerät gemäß einem der Ansprüche 1 bis 7, dadurch charakterisiert, dass es eine Antenne (202) und einen elektronischen Kommutator (208), der mit der Antenne (202) verbunden ist, aufweist, wobei der Kommutator (208) eingerichtet ist, den Empfänger (206) von der Antenne (202) abzukoppeln.

9. Endgerät gemäß einem der Ansprüche 1 bis 8, dadurch charakterisiert, dass es eine Vorrichtung zu Schützen gegen die Radiofrequenzüberladungen aufweist, die mit dem Eingang des Empfängers (206) verbunden ist.

10. Kommunikationsendgerät gemäß einem der Ansprüche 1 bis 9, dadurch charakterisiert, dass die globale Dekodiereinheit (248) aufweist, die mit einem vorbestimmten globalen Code verknüpft ist, einen Dekodierer (252) aufweist, der mit einem Fehlerkorrekturkode verknüpft ist, der in der Menge der Block-Codes und der Konvolutionscodes enthalten ist.

11. Kommunikationsendgerät gemäß einem der Ansprüche 1 bis 10, dadurch charakterisiert, dass die globale Dekodiereinheit (252), die mit einem vorbestimmten globalen Code verknüpft ist, mindestens einen Fehlerkorrekturdekodierer (252) aufweist, der mit einem Fehlerkorrekturkode verknüpft ist, der in der Menge der Kodes zur Paritätsüberprüfung mit niedriger Dichte, LDPC, der Turbo-Codes, der Reed-Solomon-Codes (RS), der Treillis-Codes, der verketteten Codes, der LT-Codes und der Raptor-Codes enthalten ist.

12. Kommunikationsendgerät gemäß einem der Ansprüche 1 bis 11, dadurch charakterisiert, dass die globale Dekodiereinheit (248) aufweist, die mit einem vorbestimmten globalen Code verknüpft ist, mindestens einen Fehlerkorrekturdekodierer vom Typ mit Mehrheitsentscheidung ist, der mit einem Paket-Wiederholdungscode verknüpft ist.

13. Kommunikationsendgerät gemäß einem der Ansprüche 1 bis 12, dadurch charakterisiert, dass die Dekodiereinheit eine Einheit zum Entschachteln eines Symbolblocks gemäß einer Verschachtelungsdauer Te aufweist.

14. Kommunikationsendgerät gemäß einem der Ansprüche 1 bis 13, dadurch charakterisiert, dass die Verwaltungs- und Zugriffssteuerungseinheit (276) eingerichtet ist zum Empfangen von Ausbreitungsverzögerungsinformationen Übertragungsressourcenzuweisungsvorschriften gemäß einem vorbestimmten Zugriffsschema und zum Ermitteln des Übertragungs- und Empfangsmusters des Endgeräts.

15. Kommunikationsendgerät gemäß einem der Ansprüche 1 bis 14, dadurch charakterisiert, dass es eine Einheit zum Ermitteln der Entfernung zwischen dem Endgerät und der zentralen Kommunikationsstation aufweist, die geeignet ist, Ausbreitungsverzögerungsinformationen zu liefern.

16. Kommunikationsendgerät gemäß einem der Ansprüche 1 bis 15, dadurch charakterisiert, dass das Frequenzband des Senders (204) und das Frequenzband des Empfängers (206) derart unterschiedlich sind, dass das Endgerät in einem Duplexzugriffsmodus gleichzeitig in der Zeit und in der Frequenz arbeiten kann.

17. Kommunikationsendgerät gemäß einem der Ansprüche 1 bis 15, dadurch charakterisiert, dass das Frequenzband des Senders (204) und das Frequenzband des Empfängers (206) derart gleich sind, dass das Endgerät in einem Duplexzugriffsmodus nur in der Zeit arbeiten kann.

18. Verfahren zum bidirektionalen Zugriff, vorgesehen für ein Kommunikationsendgerät das zum Senden in einem Sendeband und zum Empfangen in einem Empfangsband von Nachrichten über eine bidirektionale Verbindung in Richtung einer zentralen Kommunikationsstation (4) geeignet ist, aufweisend die Schritte bestehend aus:
Empfangen (386) eines ersten Kommunikationssignals in einem oder mehreren Empfangszeitschlitzen (354, 356) durch einen Empfänger
Demodulieren (390) des Signals, das in jedem Empfangszeitschlitz (354, 356) unter den mindestens einem Empfangszeitschlitz (354, 356) empfangen wurde, in eine Informationssymbolfolge, die einen Symbolblock bildet, durch einen Demodulator,
Dekodieren, durch eine globale Dekodiereinheit (248) aufweist, die mit einem vorbestimmten globalen Code verknüpft ist, des demodulierten Blocks und
gegebenenfalls Korrigieren einer Anzahl von konsekutiven fehlerhaften Symbolen, wobei eine maximale Anzahl von konsekutiven fehlerhaften Symbolen pro vorbestimmten Block erreicht werden kann, und
Senden (394) einer zweite Kommunikationsnachricht durch einen Sender zu der gleichen Zeit, wie der des Empfangs des ersten Signals, und
Aktivieren (384), durch eine Verwaltungs- und Zugriffssteuerungseinheit (276), des Senders zum Senden der zweiten Nachricht (360) in ein oder mehreren ununterbrochenen Sendezeitschlitzen (362, 364), wobei jeder ununterbrochene Sendezeitschlitz (362, 364) mindestens ein Sendezeitintervall (366, 368, 370) aufweist, wobei jedes Sendezeitintervall (366, 368, 370) in einem Empfangsschlitz (354, 356) enthalten ist, wobei jeder ununterbrochene Sendezeitschlitz (362, 364) in einem Empfangsschlitz (354) enthalten ist oder an der Grenze zwischen zwei konsekutiven Empfangsschlitzen (354, 356) liegt,
dadurch charakterisiert, dass das Endgerät einen Frequenzduplexer zur Isolation des Sendebandes und des Empfangsbandes entbehrt und die Gesamtdauer der Sendezeitintervalle (366, 368), die in demselben Empfangszeitschlitz (354) enthalten sind,
kleiner oder gleich der Dauer ist, die der vorgegebenen maximalen Anzahl von konsekutiven fehlerhaften Symbolen entspricht, die die globale Dekodiereinheit (248), die mit einem vorbestimmten globalen Code verknüpft ist, geeignet ist zu korrigieren.

19. Kommunikationssystem zum Übertragen von Nachrichten über eine bidirektionale Verbindung zwischen einer zentralen Kommunikationsstation (4) und mindestens einem Kommunikationsendgerät (6, 8) aufweisend:
mindestens ein Kommunikationsendgerät (200) wie in einem der Ansprüche 1 bis 17 definiert,
eine zentrale Kommunikationsstation (4) mit einer globalen Kodiereinheit, die der globalen Dekodiereinheit (248) des Endgeräts (200) entspricht und eine Verwaltungs- und Zugriffssteuerungseinheit, die eingerichtet ist, den Zugriff auf die Hin- und Rückkanäle zum und von dem mindestens einem Endgerät (200) zu verwalten.

## Claims

1. Communication terminal intended to transmit in a transmission band and to receive in a reception band messages on a bidirectional link to a central communication station (4), comprising:
a receiver (206) able to receive a first communication signal in one or more consecutive reception time slices (354, 356) and to demodulate the signal received in each reception time slice (354, 356) taken from at least one reception time slice (354, 356) in a series of symbols forming a block of symbols,
the receiver (206) comprising a global decoding unit (248) associated with a predetermined global coding able to correct, in the block of symbols, a predetermined maximum number of consecutive erroneous symbols, and
a transmitter (204) able to transmit a second communication message (360) at the same time as the first signal is received, and
a management and access-control unit (276) able to control the transmitter (204) so as to transmit the second message (360) in one or more uninterrupted transmission time slices (362, 364), each uninterrupted transmission time slice (362, 364) comprising at least one transmission time slot (366, 368, 370), each transmission time slot (366, 368, 370) being included in a reception slice (354, 356), each uninterrupted transmission time slice (362, 364) being included in a reception slice (354) or straddling two consecutive reception slices (354, 356),
**characterised in that**
the terminal has no frequency duplexer for isolating the transmission and reception bands, and
the total duration of the transmission time slots (366, 368) contained in the same reception time slice (354) is less than or equal to the duration corresponding to the predetermined maximum number of consecutive erroneous symbols that the global decoding unit (248) associated with a predetermined global coding is able to correct.

2. Terminal according to claim 1, **characterised in that** the total duration of the transmission time slots contained in the same reception time slice (356) is equal to the duration corresponding to the predetermined maximum number of consecutive erroneous symbols.

3. Terminal according to either one of claims 1 and 2, **characterised in that** a single transmission slot (370) is contained in the same reception time slice (356).

4. Terminal according to any one of claims 1 to 3, **characterised in that** a transmission time slice (364) comprises a first transmission slot (368) associated with a first reception time slice (354) and adjacent to a second transmission slot (370) associated with a second reception time slice (356), the first and second reception time slices (354, 356) being consecutive.

5. Terminal according to any one of claims 1 to 4, **characterised in that** the durations of a symbol in the first series of symbols and of a symbol in the second message are equal.

6. Terminal according to any one of claims 1 to 5, **characterised in that** the duration of any reception time slice (354, 356) is the same.

7. Terminal according to any one of claims 1 to 6, **characterised in that** the management and access-control unit (276) is able to deactivate the receiver (206) when the transmitter (204) transmits so as to avoid electromagnetic coupling between the transmitter (204) and the receiver (206).

8. Terminal according to any one of claims 1 to 7, **characterised in that** it comprises an antenna (202) and an electronic switch (208) connected to the antenna (202), the switch (208) being able to disconnect the receiver (206) from the antenna (202).

9. Terminal according to any one of claims 1 to 8, **characterised in that** it comprises a device for protecting against radio-frequency overloads connected to the input of the receiver (206).

10. Communication terminal according to any one of claims 1 to 9, **characterised in that** the global decoding unit (248) associated with a predetermined global coding comprises a decoder (252) associated with an error correcting code included in all the block codes and convolutional codes.

11. Communication terminal according to any one of claims 1 to 10, **characterised in that** the global decoding unit (252) associated with a predetermined global coding comprises at least one error correcting decoder (252) associated with an error correcting code included in all the low-density parity-check codes, LDPC, turbo-codes, Reed-Solomon (RS) codes, trellis codes, concatenated codes, LT codes and Raptor codes.

12. Communication terminal according to any one of claims 1 to 11, **characterised in that** the global decoding unit (248) associated with a predetermined global coding comprises at least one decoder of the majority vote type associated with a packet repetition code.

13. Communication terminal according to any one of claims 1 to 12, **characterised in that** the decoding unit comprises a unit for de-interlacing a block of symbols according to an interlacing period Te.

14. Communication terminal according to any one of claims 1 to 13, **characterised in that** the management and access-control unit (276) is able to receive propagation delay information and instructions allocating transmission resources according to a predetermined access scheme, and to determine the transmission and reception frame of the terminal.

15. Communication terminal according to any one of claims 1 to 14, **characterised in that** it comprises a unit for determining distance between the terminal and the central communication station able to supply propagation delay information.

16. Communication terminal according to any one of claims 1 to 15, **characterised in that** the frequency band of the transmitter (204) and the frequency band of the receiver (206) are different so that the terminal is able to function in an access mode duplexed both for time and frequency.

17. Communication terminal according to any one of claims 1 to 15, **characterised in that** the frequency band of the transmitter (204) and the frequency band of the receiver (206) are the same so that the terminal is able to function in an access mode duplexed only for time.

18. Bidirectional access method intended for a communication terminal able to transmit and receive messages over a bidirectional link to and from a central communication station (4), comprising the steps consisting of:
receiving (386), in one or more reception time slices (354, 356) by means of a receiver, a first communication signal,
demodulating (390), by means of a demodulator, the signal received in each reception time slice (354, 356) taken from at least one reception time slice (354, 356) in a series of information symbols forming a block of symbols,
decoding (392), by means of a global decoding unit (248) associated with a predetermined global coding, the block of demodulated symbols and where applicable correcting a number of consecutive erroneous symbols that may achieve a maximum number of consecutive erroneous symbols per predetermined block, and
transmitting (394), by means of a transmitter, a second communication signal at the same time as the reception of the first communication signal, and
activating (384) the transmitter, by means of a management and access-control unit (276), in order to transmit a second message (360) in one or more uninterrupted transmission time slices (362, 364), each uninterrupted transmission time slice (362, 364) comprising at least one transmission time slot (366, 368, 370), each transmission time slot (366, 368, 370) being included in a reception slice (354, 356), each uninterrupted transmission time slice (362, 364) being included in a reception slice (354) or straddling two consecutive reception slices (354, 356),
**characterised in that**
the terminal has no frequency duplexer for isolating the transmission and reception bands, and
the total duration of the transmission time slots (366, 368) contained in the same reception time slice (354) is less than or equal to the duration corresponding to the predetermined maximum number of consecutive erroneous symbols that the global decoding unit (248) associated with a predetermined global coding is able to correct.

19. Communication system intended to transfer messages over a bidirectional link between a central communication station (4) and at least one communication terminal (6, 8), comprising:
at least one communication terminal (200) as defined in any one of claims 1 to 17,
a central communication station (4) comprising a global coding unit corresponding to the global decoding unit (248) of the terminal (200) and a management and access-control unit able to manage the accesses of the outward and return channels to and from the at least one terminal (200).
